# EUROPEAN PATENT SPECIFICATION

(11) **EP 3 068 180 B1**
(45) Date of publication and mention of the grant of the patent: **30.08.2023**
(21) Application number: 14860298.0
(22) Date of filing: 06.11.2014
(51) Int. Cl.: H04W 72/25, H04W 8/00, H04W 72/02

(54) **METHODS AND DEVICES FOR TRANSMITTING AND RECEIVING DATA**
VERFAHREN UND VORRICHTUNG ZUM SENDEN UND EMPFANGEN VON DATEN
PROCÉDÉ ET DISPOSITIF D'ENVOI ET DE RÉCEPTION DE DONNÉES

(30) Priority: 08.11.2013 CN 201310553612
(43) Date of publication of application: 14.09.2016
(73) Proprietor: Datang Mobile Communications Equipment Co., Ltd., Beijing 100085 (CN)
(72) Inventor: GAO, Qiubin, Beijing 100191 (CN); CHEN, Wenhong, Beijing 100191 (CN); PENG, Ying, Beijing 100191 (CN); ZHAO, Rui, Beijing 100191 (CN)
(74) Representative: Studio Torta S.p.A.
(86) International application number: PCT/CN2014/090491
(87) International publication number: WO 2015/067196

(56) References cited:
- WO-A1-2015/065107
- CN-A- 102 204 155
- CN-A- 102 612 090
- CN-A- 102 711 216
- US-A1- 2012 099 453
- US-A1- 2013 109 301
- CATT: "Resource allocation for D2D discovery", 3GPP DRAFT; R1-133786, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Barcelona, Spain; 20130819 - 20130823 23 August 2013 (2013-08-23), XP050716883, Retrieved from the Internet: URL:http://www.3gpp.org/ftp/tsg_ran/WG1_RL 1/TSGR1_74/Docs/ [retrieved on 2013-08-23]
- CATT: "Considerations on D2D Discovery", 3GPP DRAFT; R2-133216 CONSIDERATIONS ON D2D DISCOVERY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Ljubljana, Slovenia; 20131007 - 20131011 27 September 2013 (2013-09-27), XP050718927, Retrieved from the Internet: URL:http://www.3gpp.org/ftp/tsg_ran/WG2_RL 2/TSGR2_83bis/Docs/ [retrieved on 2013-09-27]
- INTEL CORPORATION: "Discussion on Resource Allocation Methods for D2D Communication", 3GPP DRAFT; R1-134139 INTEL - RESOURCE ALLOCATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Guangzhou, China; 20131007 - 20131011 28 September 2013 (2013-09-28), XP050717329, Retrieved from the Internet: URL:http://www.3gpp.org/ftp/tsg_ran/WG1_RL 1/TSGR1_74b/Docs/ [retrieved on 2013-09-28]

## Description

### TECHNICAL FIELD

The present disclosure relates to the field of wireless communication technology, in particular to methods and devices for transmitting and receiving data.

### BACKGROUND

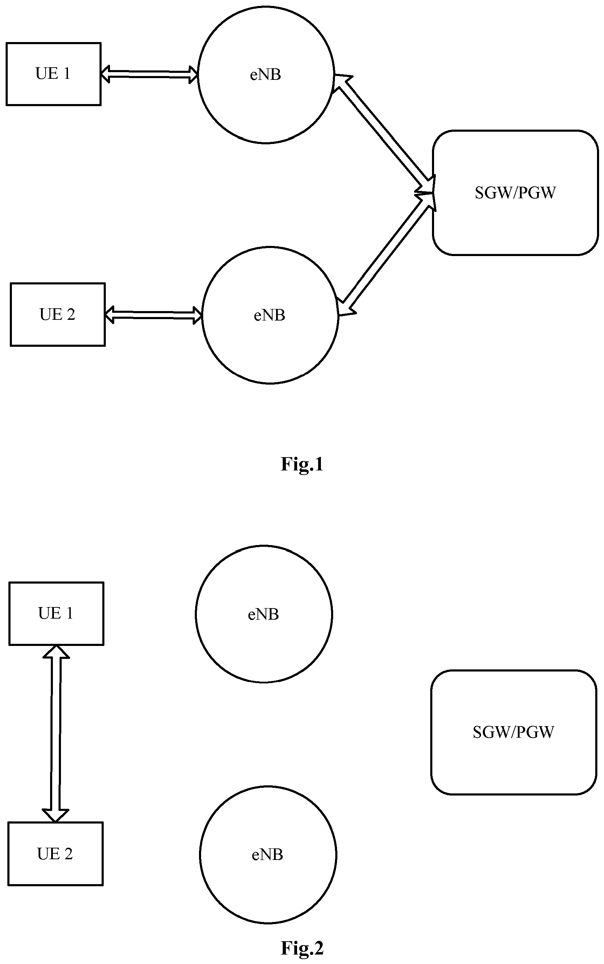

Fig.1 shows a data communication procedure between two User Equipments (UEs) for a traditional cellular communication technology. Services, such as audio and data services, are interacted between the two UEs via a core network and evolved NodeBs (eNBs) where the UEs reside.

A Device-to-Device (D2D) technology refers to a mode where the data may be transmitted between the adjacent UEs within a short range via a direct link, without being forwarded via a central node (i.e., a base station), as shown in Fig.2. Because of such feature as short-range and direct communication, the D2D technology has the following advantages.

Due to the short-range and direct communication mode for the UEs, it is able to provide high data rate, low delay and low power consumption. By using the UEs distributed over a network and the short-range D2D communication link, it is able to utilize spectral resources efficiently. The D2D direct communication mode may be adapted to the requirements of the services, such as wireless Peer-to-Peer (P2P) services, on local data sharing, and thereby it is able to provide the data services in a flexible manner. The D2D direct communication mode may make use of the large quantity of UEs distributed over the network, so it is able to expand a coverage range of the network.

D2D discovery, as one service form of the D2D technology, refers to the acquisition of relevant information about an adjacent D2D UE, including equipment information, application information, service type, etc., by a D2D UE through detecting a wireless signal from the adjacent D2D UE.

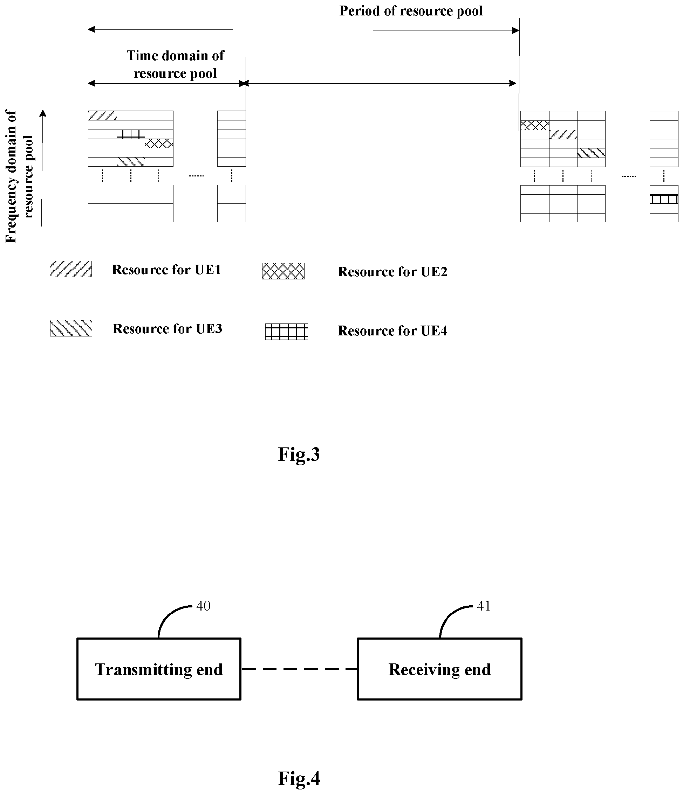

As shown in Fig.3, the UE performs the signal transmission over parts of the resources in a resource pool. This signal transmission may be the transmission of D2D signals or cellular signals. The resource pool consists of some time-frequency resources each having a certain time range and a certain frequency range, and it may occur in a time domain periodically. In Fig.3, the resource pool is continuous in both the time domain and a frequency domain. Actually, the resource pool may also consist of discontinuous time-frequency resources. The resources in the resource pool are divided into several transmission resources, and one or more transmission resources in the resource pool are used by the UE for the data transmission. Each transmission resource may include one Physical Resource Block (PRB), or more than one PRBs which may be continuous or discontinuous.

At a transmitting device, the UE select randomly one transmission source from the resource pool for the transmission. In order to improve the coverage range of the transmitted signal, the UE at the transmitting device may select randomly a plurality of transmission resources for the transmission. However, at a receiving device, it is impossible for the UE, before detection, to acquire information about the resources selected by the transmitting device. The UE at a receiving device may merely detect the received data, but cannot combine and then detect the signals from the UE at the transmitting device and transmitted over the plurality of transmission resources. As a result, a success rate for the detection is relatively low.

In a word, it is currently impossible for the UE at the receiving device to combine and detect the signals from the UE at the transmitting device and transmitted over the plurality of transmission resources, so the success rate for the detection is relatively low. Document US 2012/0099453 relates to a method and arrangement in a user equipment and a method and arrangement in a base station. Document by Intel Corporation: "Discussion on Resource Allocation Methods for D2D Communication", 3GPP Draft, R1-134139, relates to D2D resource allocation using resource pools. However, the above issues are not solved.

### SUMMARY

An object of the present disclosure is to provide a method and a device for transmitting data, so as to enable a UE at a receiving device to combine and detect signals from a UE at a transmitting device and transmitted over a plurality of transmission resources, thereby to improve a success rate for the detection.

Another object of the present disclosure is to provide a method and a device for receiving data.

According to the embodiments of the present disclosure, the to-be-transmitted data is transmitted by the transmitting device over the second transmission resource associated with the first transmission resource, and the data information is received by the receiving device over the second transmission resource associated with the first transmission resource, so as to improve a detection success rate. In addition, because the receiving device can receive the data information over the first transmission resource and the second transmission resource associated with the first transmission resource, it is able to ensure that the receiving device combines the signals transmitted from a UE at the transmitting device over a plurality of transmission resources and detects the combined signals, so as to improve the detection success rate, thereby to further improve the transmission performance.

### BRIEF DESCRIPTION OF THE DRAWINGS

Fig. 1 is a schematic view showing an existing data transmission procedure between UEs via a cellular network;
Fig.2 is a schematic view showing an existing direct data transmission procedure between the UEs;
Fig.3 is a schematic view showing an existing resource pool;
Fig.4 is a schematic view showing a system for receiving data according to the first embodiment of the present disclosure;
Fig.5 is a schematic view showing data transmission resources according to the second embodiment of the present disclosure;
Fig.6 is a schematic view showing the transmission of indication information according to the third embodiment of the present disclosure;
Fig.7 is a schematic view showing a transmitting device in the system for receiving data according to the fourth embodiment of the present disclosure;
Fig. 8 is a schematic view showing a receiving device in the system for receiving data according to the fifth embodiment of the present disclosure;
Fig.9 is a schematic view showing the transmitting device in the system for receiving data according to the sixth embodiment of the present disclosure;
Fig. 10 is a schematic view showing the receiving device in the system for receiving data according to the seventh embodiment of the present disclosure;
Fig. 11 is a flow chart of a method for transmitting data according to the eighth embodiment of the present disclosure; and
Fig. 12 is a flow chart of a method for receiving data according to the ninth embodiment of the present disclosure.

### DETAILED DESCRIPTION OF THE EMBODIMENTS

According to the embodiments of the present disclosure, to-be-transmitted data is transmitted by a transmitting device over a second transmission resource associated with a first transmission resource, and data information is received by a receiving device over the second transmission resource associated with the first transmission resource, so as to improve a detection success rate. In addition, because the receiving device can receive the data information over the first transmission resource and the second transmission resource associated with the first transmission resource, it is able to ensure that the receiving device combines signals transmitted from a UE at the transmitting device over a plurality of transmission resources and detects the combined signals, so as to improve the detection success rate, thereby to further improve the transmission performance.

The present disclosure will be described hereinafter in conjunction with the drawings and embodiments.

As shown in Fig.4, a system for receiving data in the first embodiment of the present disclosure includes a transmitting device 40 and a receiving device 41. The transmitting device 40 is configured to determine a first transmission resource for data transmission, determine a second transmission resource from a second transmission resource pool corresponding to the first transmission resource, and transmit to-be-transmitted data over the first transmission resource and the second transmission resource. The receiving device 41 is configured to determine the first transmission resource for the data transmission, the second transmission resource corresponding to the first transmission resource, and receive data information over the first transmission resource and the second transmission resource. The first transmission resource is different from the second transmission resource.

During the implementation, there are various modes for determining the first transmission resource by the transmitting device, and some of them will be listed hereinafter.

In Mode 1, the transmitting device determines the first transmission resource in accordance with first indication information received by the transmitting device.

To be specific, a network-side device or any other device allocates the first transmission resource for the transmitting device, and transmits the first indication information corresponding to the allocated first transmission resource to the transmitting device via high-layer signaling or physical-layer signaling. The network-side device or the other device may allocate the first transmission resource for the transmitting device in accordance with the practical need. The first indication information is information capable of indicating the first transmission resource, e.g., a position of the first transmission resource.

In Mode 2, the transmitting device determines the first transmission resource from a first transmission resource pool. The first transmission resource pool may be allocated by the network-side device or the other device for the transmitting device, or predefined by a protocol or the like.

To be specific, the transmitting device randomly select the first transmission resource from the first transmission resource pool, or select the first transmission resource in accordance with measured signal strength over all the transmission resources in the first transmission resource pool, or select the first transmission resource from the first transmission resource pool in accordance with a first predetermined selection rule.

During the implementation, when the transmitting device randomly selects the first transmission resource from the first transmission resource pool, the first transmission resource may be randomly selected from the first transmission resource pool at an identical probability or different probabilities.

To be specific, presumed that there are N transmission resources in the transmission resource pool, random variables are first generated by the transmitting device and distributed evenly within [1, 2, ..., N] during the selection. The transmission resources in the resource pool corresponding to these random variables as index values are just the resources selected by the transmitting device. A probability of the random variable within [1, 2, ..., N] is 1/N when it takes a value of n (1≤n≤N).

Alternatively, random variables are first generated by the transmitting device and distributed unevenly within [1, 2, ..., N] during the selection. The transmission resources in the resource pool corresponding to these random variables as the index values are just the transmission resources selected by the transmitting device. A probability of the random variable within [1, 2, ..., N] when it takes a value of n (1≤n≤N) may not be equal to 1/N. For example, the probability of the random variable when it takes a value of 1 may be 1/2, and the probability of the random variable when it takes a value of n (1<n≤N) may be 1/(2(N-1)).

During the implementation, when the transmitting device selects the first transmission resource in accordance with the measured signal strength over all the transmission resources in the first transmission resource pool, it may measure all the transmission resources in the first transmission resource pool so as to determine the signal strength over all the transmission resources, and then select N transmission resources with the smallest signal strength as the first transmission resources.

The signal strength may be signal power, path loss for signal transmission, or a Signal to Interference and Noise Ratio (SINR).

During the implementation, when the transmitting device selects the first transmission resource from the first transmission resource pool in accordance with the first predetermined selection rule, the first predetermined selection rule may be Equation 1: M = EQUIP_ID mod N, where M is an index value of the selected first transmission resource in the first transmission resource pool, EQUIP_ID is an identifier of the transmitting device, and N is the number of the transmission resources in the first transmission resource pool.

The identifier of the transmitter end may be International Mobile Subscriber Identity (IMSI), Temporary Mobile Station Identity (TMSI), Cell Radio Network Temporary Identity (C-RNTI), equipment identifier (ID), Internet Protocol (IP) address, Medium Access Control (MAC) address, and so on. Each transmission resource in the first transmission resource pool has a unique index value, which may be generated in accordance with a certain rule (e.g., generated in accordance with a position of the resource, or generated randomly), or may be predefined.

The first selection rule may also be Equation 2: M = InformationBits mod N, where M is an index value of the selected first transmission resource in the resource pool, InformationBits is decimal expressions of data bits to be transmitted by the transmitting device, and N is the number of the transmission resources in the transmission resource pool. Also, InformationBits may be the decimal expressions of a part of data bits to be transmitted by the transmitting device, e.g., the decimal expressions of the last ten bits.

During the implementation, the modes for selecting, by the transmitting device, the second transmission resource corresponding to the first transmission resource from the second transmission resource pool corresponding to the first transmission resource are similar to those for selecting the first transmission resource. To be specific, the transmitting device randomly selects the second transmission resource from the second transmission resource pool, or selects the second transmission resource in accordance with measured signal strength over all the transmission resources in the second transmission resource pool, or selects the second transmission resource from the second transmission resource pool in accordance with a second predetermined selection rule.

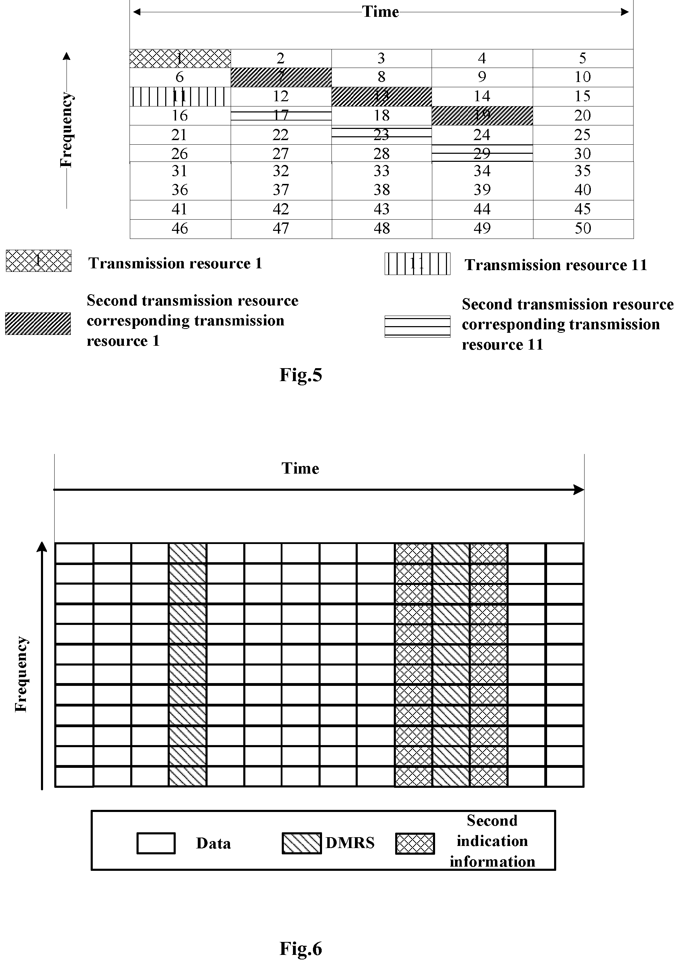

As shown in Fig.5, a second transmission resource pool corresponding to a transmission resource 1 includes three transmission resources, i.e., {7,13,19}, and a second transmission resource pool corresponding to a transmission resource 11 also includes three transmission resources, i.e., {17,23,29}. When the transmission resource 1 is selected by the transmitting device as the first transmission resource, the second transmission resource can merely be selected from the corresponding second transmission resource pool {7,13,19}, e.g., a transmission resource 13 may be selected as the second transmission resource. The number of the transmission resources in the second transmission resource pool may be set in accordance with the practical need. Alternatively, two, three or four transmission resources may be included in the second transmission resource pool.

There are various modes for the transmitting device to determine the second transmission resource pool corresponding to the first transmission resource.

In Mode 1, the transmitting devices may take a predetermined resource pool as the second transmission resource pool. For example, the data transmission resources which belong to the second transmission resource pool may be specified in a protocol.

In Mode 2, the transmitting device may determine the second transmission resource pool in accordance with a mapping relationship between the first transmission resource and the second transmission resource pool.

For example, when an index value of the first transmission resource in the first transmission resource pool is k, the second transmission resource pool may be {k+t+1, k+2t+2, k+3t+3}, where t is a range of the second transmission resource pool in a time or frequency domain, e.g., t is the number of subframes included in the second transmission resource pool or the number of PRBs within one subframe.

For another example, when a position of the first transmission resource in the first transmission resource pool is (k, m), (where a first coordinate represents a k^{th} time-domain unit, a second coordinate represents an m^{th} frequency-domain unit, and (k, m) represents that the first transmission resource is located within the m^{th} frequency-domain unit of the k^{th} time-domain unit in the first transmission resource pool), the second transmission resource pool may be {(k+1, m)}, or {(k+1, m), (k+2, m)}, or {(k+1,m), (k+2, m), (k+3, m)}, or {(k+1, m+1), (k+1, m+2)}. Here, the second transmission resource pool may be represented by the positions of elements of the second transmission resource pool in the first transmission resource pool. During the implementation, the elements of the second transmission resource pool may not be located within the first transmission resource pool.

For a Long-Term Evolution (LTE) system, the first transmission resource pool may consist of M PRBs within K subframes. When each PRB is a transmission resource, there are K^{∗}M transmission resources in the first transmission resource pool. A position of the first transmission resource in the first transmission resource pool is (k, m), where a first coordinate represents a k^{th} subframe, a second coordinate represents an m^{th} PRB, and (k, m) represents that the first transmission resource is located within the m^{th} PRB of the k^{th} subframe in the first transmission resource pool. At this time, the second transmission resource pool may be {(k+1, m)}, or {(k+1, m), (k+2, m)}, or {(k+1,m), (k+2, m), (k+3, m)}. Alternatively, adjacent subframes and an identical PRB are occupied by the second transmission resource pool and the first transmission resource in the time domain. There may be only one element in the second transmission resource pool. Here, the second transmission resource pool is represented by positions of the elements of the second transmission resource pool in the first transmission resource pool. During the implementation, the elements of the second transmission resource pool may not be located in the first transmission resource pool.

In Mode 3, the transmitting device selects the transmission resources for the second transmission resource pool in accordance with the measured signal strength over all the transmission resources in the first transmission resource pool. For example, the transmitting device may measure the signal strength over all the transmission resources in the first transmitting resource pool, and select L transmission resources (the first transmission resource exclusive) with the smallest signal power to form the second transmission resource pool.

In Mode 4, the transmitting device selects, in accordance with a second predetermined selection rule or randomly, the transmission resources from the first transmission resource pool to form the second transmission resource pool.

To be specific, the transmitting device may select L transmission resources (the first transmission resource exclusive) from the first transmission resource pool at an identical probability or different probabilities to form the second transmission resource pool.

The second transmission resource pool selected from the first transmission resource pool in accordance with the second predetermined selection rule may be {M, M+1, M+2, ..., M+L}, where L+1 is a size of the second transmission resource pool, and M, M+1, M+2, ..., M+L are index values of the elements of the selected second transmission resource pool in the first transmission resource pool. M = EQUIP_ID mod N, where EQUIP_ID is an identifier of the transmitting device, and N is the number of the transmission resources in the first transmission resource pool.

The identifier of the transmission end may be IMSI, TMSI, C-RNTI, equipment ID, IP address, MAC address, and so on. Each transmission resource in the first transmission resource pool has a unique index value, which may be generated in accordance with a certain rule (e.g., generated in accordance with a position of the resource, or generated randomly), or may be predefined.

Alternatively, M = InformationBits mod N, where InformationBits is decimal expressions of data bits to be transmitted by the transmitting device, and N is the number of the transmission resources in the transmission resource pool. Also, InformationBits may be the decimal expressions of a part of the data bits to be transmitted by the transmitting device, e.g., the decimal expressions of the last 10 bits.

In Mode 5, the transmitting device takes the first transmission resource pool as the second transmission resource pool.

Here, the resource pool consists of some time-frequency resources in a certain time domain and a certain frequency domain. The resource pool may occur periodically in the time domain, as shown in Fig.3.

There are various modes for the transmitting device to transmit the to-be-transmitted data over the first transmission resource and the second transmission resource. In Mode 1, the transmitting device repeatedly transmits a signal generated in accordance with the to-be-transmitted data over the first transmission resource and the second transmission resource. In Mode 2, the transmitting device transmits signals generated in accordance with different redundancy version data of the to-be-transmitted data over the first transmission resource and the second transmission resource. In Mode 3, the transmitting device divides the to-be-transmitted data or data obtained after modulating and encoding the to-be-transmitted data into two parts, and transit signals generated in accordance with one of the two parts of the data over the first transmission resource and the second transmission resource respectively. In other words, in Mode 3, the to-be-transmitted data needs to be divided into a plurality of parts, and each part of the data is transmitted over one transmission resource.

For the receiving device, it may determine the first transmission resource in accordance with an instruction from the network-side device or may pre-configure the first transmission resource in accordance with a protocol. The receiving device receives the data over the first transmission resource and acquires the data information. The data information is hard decision information or soft bit information of the to-be-transmitted data.

When the data information acquired by the receiving device over the first transmission resource can be decoded accurately, e.g., via Cyclic Redundancy Check (CRC), subsequent procedures may not be performed (when the above Mode 3 is used for transmitting the data, the subsequent procedures still need to be performed after the data information is decoded accurately).

The subsequent procedures include receiving the data over the second transmission resource, acquiring the data information, and combining the data information with the data information acquired over the first transmission resource.

During the implementation, there are various modes for the receiving device to determine the second transmission resource, and some of them will be listed hereinafter.

In Mode 1, the receiving device takes each transmission resource in the second transmission resource pool corresponding to the first transmission resource as one second transmission resource. When Mode 1 is adopted, the receiving device may combine the data information received over the first transmission resource with the data information received over the second transmission resource, and decode the combined data information.

To be specific, the receiving device may receive the data information over each second transmission resource, and combine the data information received over the first transmission resource with the data information received over each second transmission resource. At this time, when there is one piece of the combined data information is detected successfully, it is determined that the data information has been received successfully, and it is unnecessary to perform the subsequent combination.

Alternatively, the receiving device may also receive the data information over each second transmission resource, and then combine the data information received over the first transmission resource with the data information received over all the second transmission resources.

Alternatively, the receiving device may also receive the data information over one second transmission resource, and then combine the data information received over the first transmission resource with the data information received over the second transmission resource. At this time, when the combined data information is detected successfully, it is determined that the data information has been received successfully, and it is unnecessary to receive the data information over the second transmission resource any more. Otherwise, the data information needs to be received over the second transmission resource continuously.

As shown in Fig.5, the receiving device receives the soft bit information over the first transmission resource 1, receives the soft bit information over the corresponding second transmission resources 7, 13, 19, and then combines the soft bit information received over the first transmission resource 1 with the soft bit information received over the second transmission resources 7, 13 19. For example, when the soft bit information obtained by combining the soft bit information received over the second transmission resource 7 with the soft bit information received over the first transmission resource 1 can be decoded accurately, it is determined that the data is received successfully.

The mode for the receiving device to determine the second transmission resource pool is similar to that for the transmitting device to determine the second transmission resource pool. To be specific, the receiving device may take a predetermined resource pool as the second transmission resource pool (here, the resource pool may consist of some time-frequency resources in a certain time domain and a certain frequency domain, and the resource pool may occur periodically in the time domain, as shown in Fig.3), or the receiving device may determine the second transmission resource pool in accordance with the mapping relationship between the first transmission resource and the second transmission resource pool, or the receiving device may take the first transmission resource pool as the second transmission resource pool.

In Mode 2, the transmitting device may transmit the second indication information. Correspondingly, the receiving device may receive the second indication information from the transmitting device and determine the second transmission resource in accordance with the second indication information.

When Mode 2 is adopted, the receiving device may combine the data information received over the first transmission resource with the data information received over the second transmission resource, and then decode the combined data information. During the implementation, the transmitting device transmits the second indication information indicating a position of the second transmission resource, and correspondingly, the receiving device determines the second transmission resource in accordance with the received second indication information.

There are various modes for the transmitting device to transmit the second indication information.

In Mode 1, the transmitting device may transmit the second indication information over the first transmission resource. Correspondingly, the receiving device may receive the second indication information from the transmitting device over the first transmission resource.

To be specific, the transmitting device transmits the second indication information dominantly over the first transmission resource. The second indication information may indicate an index value of the second transmission resource in the second transmission resource pool corresponding to the first transmission resource, or information about a position, a time-frequency position, of the second transmission resource.

The dominant indication information and the data information may be encoded and transmitted separately. For example, as shown in Fig.6, a part of the first transmission resources may be reserved for the transmission of the second indication information. Alternatively, the second indication information is transmitted at an encoding rate lower than that for the data transmission.

In Mode 2, the transmitting device may modulate the second indication information onto a demodulation pilot signal of the first transmission resource, and then transmit the modulated second indication information to the receiving device. Correspondingly, the receiving device may determine the second indication information from the transmitting device by demodulating information modulated on the demodulation pilot signal of the first transmission resource. The second indication information is information indicating a position of the second transmission resource, or may be index information of the second transmission resource in the second transmission resource pool.

As shown in Fig.5, there are two columns of demodulation pilot signals in the first transmission resource, and the second indication information is modulated onto the demodulation pilot signals in a second column. The receiving device demodulates the second indication information modulated onto the demodulation pilot signals in the second column in accordance with a channel estimation value obtained in accordance with the demodulation pilot signals in a first column. Alternatively, the receiving device performs joint detection on the demodulation pilot signals in the first column, the demodulation pilot signals in the second column and the second indication information, so as to obtain the channel estimation value and the second indication information modulated onto the demodulation pilot signals simultaneously.

For example, when there are four elements in a set of candidate transmission resources, two-bit information needs to used to indicate each element, and the pieces of the two-bit information correspond to {00, 01, 11, 10} respectively. Each piece of the two-bit information may be mapped to one of {1, -1, j, -j} and denoted by z. The pilot sequence is s(n), where n = 0, 1, ..., P-1, and P is a length of the pilot sequence. The modulated pilot sequence is r(n) = z·s(n), where n = 0, 1, ..., P-1. The transmitting device transmits the modulated pilot sequence at a position of the demodulation pilot signal in the second column. Here, the description is given by taking the first transmission resource including two columns of the demodulation pilot signals as an example, and the indication information may be modulated in a similar manner when the first transmission resource includes the demodulation pilot signals in more than two columns. For example, when the first transmission resource includes the demodulation pilot signals in four columns, the indication information may be modulated onto two columns of the demodulation pilot signals.

In Mode 3, the transmitting device may take a parameter value of the demodulation pilot sequence(DMRS, demodulation reference signal) of the first transmission resource as the second indication information. Correspondingly, the receiving device may determine the parameter value of the DRMS of the first transmission resource, and map the parameter value into the second indication information. The second indication information is information about a position of the second transmission resource, or may be index information of the second transmission resource in the second transmission resource pool.

To be specific, the parameter value of the DMRS of the first transmission resource may be indicated by a cyclic shift value or an Orthogonal Cover Code (OCC) value of the DMRS. The receiving device may perform blind detection on the DMRS so as to determine the cyclic shift value or the OCC value, thereby to determine the position of the second transmission resource.

For example, there are two Circuit Switched (CS) values defining the DMRS, i.e., {0, 6}. When the receiving device determines, through detection, that the CS value is 0, the second transmission resource is the first resource in the second transmission resource pool, and when the receiving device determines, through detection, that the CS value is 6, the second transmission resource is the second resource in the second transmission resource pool. The second transmission resource may also be determined by detecting the OCC value, or by detecting both the cyclic shift value and the OCC value.

During the implementation, the second indication information may also be used to indicate whether or not there is the second transmission resource. When the second indication information indicates that there is not the second transmission resource, the receiving device may not perform the subsequence operation after detecting and receiving the signal on the first transmission resource. For example, the second indication information may be used to indicate four states, i.e., {00, 01, 10, 11}, where 00, 01 and 10 correspond to three candidate transmission resources, respectively, and 11 is used to indicate that there is not the second transmission resource.

For example, when the second transmission resource corresponding to the first transmission resource includes one transmission resource, the second indication information may use two states to indicate whether or not there is the second transmission resource. When the second indication information indicates that there is not the second transmission resource, the receiving device may not perform the subsequent operation after detecting and receiving the signal on the second transmission resource. When the second indication information indicates that there is the second transmission resource, the receiving device may determine the position of the second transmission resource. Then, the receiving device may combine the data information received over the second transmission resource with the data information received over the first transmission resource.

Alternatively, the transmitting device may send the third indication information indicating whether or not to transmit the data over the second transmission resource. Correspondingly, the receiving device determines that the data is to be received over the second transmission resource in accordance with the received third indication information.

To be specific, the transmitting device may transmit the third indication information via the DMRS of the first transmission resource, and correspondingly, the receiving device may determine the third indication information by demodulating the information modulated onto the DMRS of the first transmission resource.

For example, when the second transmission resource pool corresponding to the first transmission resource includes one transmission resource, the third indication resource may use two states to indicate whether or not there is the second transmission resource. When the third indication information indicates that there is not the second transmission resource, the receiving device may not perform the subsequent operation after detecting and receiving the signal on the second transmission resource. When the third indication information indicates that there is the second transmission resource, the receiving device may determine the position of the second transmission resource. Then, the receiving device may combine the data information received over the second transmission resource with the data information received over the first transmission resource.

In the embodiments of the present disclosure, one of the first transmission resources may include one or more transmission resources, and one of the second transmission resource may include one or more transmission resources. The transmitting device and the receiving device may be a UE such as a mobile phone, or a network-side device such as a base station. The network-side device may be an access network device such as a base station or eNB, or a core network device such as a Mobility Management Entity (MME).

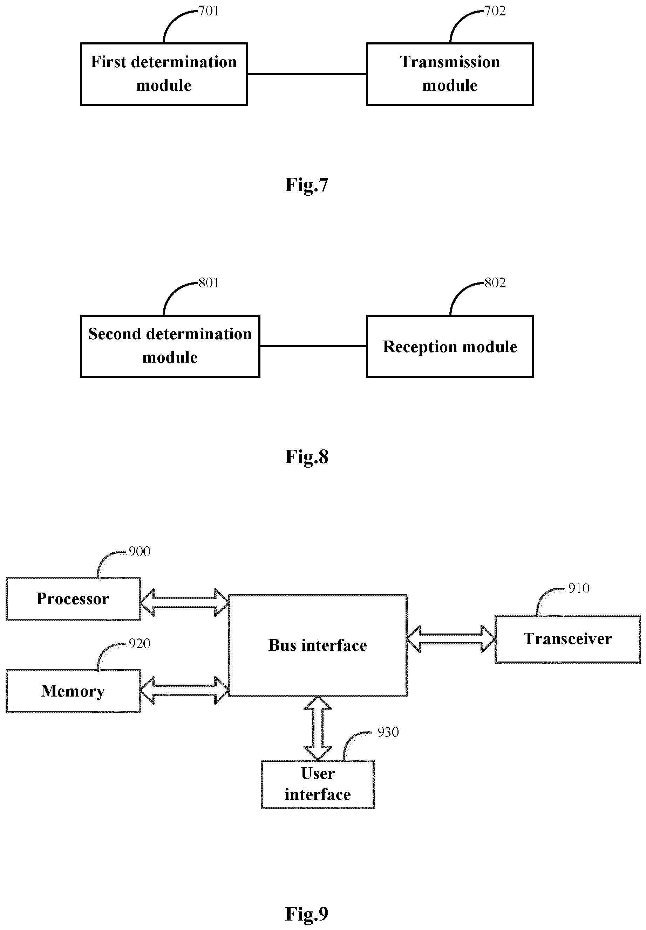

As shown in Fig.7, in the fourth embodiment of the present disclosure, the transmitting device in the system for receiving data includes a first determination module 701 and a transmission module 702. The first determination module 701 is configured to determine the first transmission resource for data transmission, and determine the second transmission resource from the second transmission resource pool corresponding to the first transmission resource. The transmission module 702 is configured to transmit the to-be-transmitted data over the first transmission resource and the second transmission resource.

Alternatively, the first determination module 701 is configured to determine the first transmission resource in accordance with the first indication information received by the transmitting device.

Alternatively, the first determination module 701 is configured to determine the first transmission resource from the first transmission resource pool.

Alternatively, the first determination module 701 is configured to randomly select the first transmission resource from the first transmission resource pool, or select the first transmission resource in accordance with the measured signal strength over all the transmission resources in the first transmission resource pool, or select the first transmission resource from the first transmission resource pool in accordance with the first predetermined selection rule.

Alternatively, the first determination module 701 is configured to select the second transmission resource corresponding to the first transmission resource from the second transmission resource pool corresponding to the first transmission resource.

Alternatively, the first determination module 701 is configured to randomly select the second transmission resource from the second transmission resource pool, or select the second transmission resource in accordance with the measured signal strength over all the transmission resources in the second transmission resource pool, or select the second transmission resource from the second transmission resource pool in accordance with the second predetermined selection rule.

Alternatively, the first determination module 701 is configured take a predetermined resource pool as the second transmission resource pool, or determine the second transmission resource pool in accordance with the mapping relationship between the first transmission resource and the second transmission resource pool, or select transmission resources as the second transmission resource pool in accordance with the measured signal strength over all the transmission resources in the first transmission resource pool, or select transmission resources as the second transmission resource pool from the first transmission resource pool randomly or in accordance with the second predetermined selection rule, or take the first transmission resource pool as the second transmission resource pool.

Alternatively, the transmission module 702 is configured to repeatedly transmit a signal generated in accordance with the to-be-transmitted data over the first transmission resource and the second transmission resource, or transmit a signal generated in accordance with different redundancy version data of the to-be-transmitted data over the first transmission resource and the second transmission resource, or divide the to-be-transmitted data or data obtained after modulating and encoding the to-be-transmitted data into two parts, and transmit signals generated in accordance with one of the two parts of the data over the first transmission resource and the second transmission resources respectively.

Alternatively, the first determination module 701 is further configured to transmit the second indication information indicating a position of the second transmission resource.

Alternatively, the first determination module 701 is configured to transmit the second indication information over the first transmission resource.

Alternatively, the first determination module 701 is configured to transmit the second indication information to the receiving device over a part of the first transmission resources.

Alternatively, the first determination module 701 is configured to modulate the second indication information onto the demodulation pilot signal of the first transmission resource and transmit the modulated second indication information to the receiving device.

Alternatively, the first determination module 701 is configured to take a parameter value of the demodulation pilot sequence of the first transmission resource as the second indication information.

Alternatively, the second indication information is information indication a position of the second transmission resource, or index information of the second transmission resource in the second transmission resource pool corresponding to the first transmission resource.

Alternatively, the transmission module 702 is further configured to transmit the third indication information indicating whether or not the data is to be transmitted over the second transmission resource.

As shown in Fig.8, in the fifth embodiment of the present disclosure, the receiving device in the system for receiving data includes a second determination module 801 and a reception module 802. The second determination module 801 is configured to determine the first transmission resource for data transmission and determine the second transmission resource corresponding to the first transmission resource. The reception module 802 is configured to receive the data over the first transmission resource and the second transmission resource.

Alternatively, the second determination module 801 is configured to determine the second transmission resource from the second transmission resource pool corresponding to the first transmission resource.

Alternatively, the second determination module 801 is configured to take each transmission resource in the second transmission resource pool corresponding to the first transmission resource as one second transmission resource, and the reception module 802 is configured to combine data information received over the first transmission resource and data information received over one or more second transmission resources, and decode the combined data information.

Alternatively, the second determination module 801 is configured to receive the second indication information from the transmitting device, and determine the second transmission resource in accordance with the second indication information. The reception module 802 is configured to combine data information received over the first transmission resource and data information received over the second transmission resource and decode the combined data information.

Alternatively, the reception module 802 is configured to receive the second indication information from the transmitting device over the first transmission resource.

Alternatively, the reception module 802 is configured to determine the second indication information from the transmitting device by demodulating information modulated on the demodulation pilot signal of the first transmission resource.

Alternatively, the reception module 802 is configured to determine the second indication information in accordance with a parameter value of the demodulation pilot sequence of the first transmission resource.

Alternatively, the second indication information is information indicating a position of the second transmission resource, or index information of the second transmission resource in the second transmission resource pool corresponding to the first transmission resource.

Alternatively, the second determination module 801 is configured to take a predetermined resource pool as the second transmission resource pool, or determine the second transmission resource pool in accordance with the mapping relationship between the first transmission resource and the second transmission resource pool, or take the first transmission resource pool as the second transmission resource pool.

Alternatively, the reception module 802 is configured to receive the data over the second transmission resource after it is determined that the data is to be received over the second transmission resource in accordance with the third indication information received by the reception module 802.

Alternatively, the reception module 802 is configured to determine the third indication information by demodulating information modulated on the demodulation pilot signal of the first transmission resource.

During the implementation, the transmitting device in Fig.7 may also serve as the receiving device, and the receiving device in Fig. 8 may also serve as the transmitting device. In other words, the functions of the transmitting device and the receiving device may be incorporated into an entity (i.e., the modules of the transmitting device and the receiving device may be integrated into the entity), and the function of the transmitting device or the receiving device may be selected in accordance with the practical need. To be specific, the first determination module 701, the transmission module 702, the second determination module 801 and the reception module 802 may be integrated into an entity. Alternatively, the first determination module 701 and the second determination module 801 may be combined into one module, the transmission module 702 and the reception module 802 may be combined into one module, and then the modules may be integrated into an entity.

As shown in Fig.9, in the sixth embodiment of the present disclosure, the transmitting device in the system for receiving data includes a processor 900 and a transceiver 910. The processor 900 is configured to determine the first transmission resource for the data transmission, determine the second transmission resource from the second transmission resource pool corresponding to the first transmission resource, and control the transceiver 910 to transmit the to-be-transmitted data over the first transmission resource and the second transmission resource. The transceiver 910 is configured to receive and transmit the data under the control of the processor 900.

Alternatively, the processor 900 is configured to determine the first transmission resource in accordance with the first indication information received by transceiver 910.

Alternatively, the processor 900 is configured to determine the first transmission resource from the first transmission resource pool.

Alternatively, the processor 900 is configured to randomly select the first transmission resource from the first transmission resource pool, or select the first transmission resource in accordance with the measured signal strength over all the transmission resources in the first transmission resource pool, or select the first transmission resource from the first transmission resource in accordance with the first predetermined selection rule.

Alternatively, the processor 900 is configured to select the second transmission resource corresponding to the first transmission resource from the second transmission resource pool corresponding to the first transmission resource.

Alternatively, the processor 900 is configured to randomly select the second transmission resource from the second transmission resource pool, or select the second transmission resource in accordance with the measured signal strength over all the transmission resources in the second transmission resource pool, or select the second transmission resource from the second transmission resource pool in accordance with the second predetermined selection rule.

Alternatively, the processor 900 is configured to take a predetermined resource pool as the second transmission resource pool, or determine the second transmission resource pool in accordance with the mapping relationship between the first transmission resource and the second transmission resource pool, or select the transmission resources to form the second transmission resource pool in accordance with the measured signal strength over all the transmission resources in the first transmission resource pool, or select, in accordance with the second predetermined selection rule or randomly, the transmission resources from the first transmission resource pool to form the second transmission resource pool, or take the first transmission resource pool as the second transmission resource pool.

Alternatively, the processor 900 is configured to control the transceiver 810 to repeatedly transmit a signal generated in accordance with the to-be-transmitted data over the first transmission resource and the second transmission resource, or transmit signals generated in accordance with different redundancy version data of the to-be-transmitted data over the first transmission resource and the second transmission resource, or divide the to-be-transmitted data or data obtained after modulating and encoding the to-be-transmitted data into two parts, and transmit signals generated in accordance with one of the two parts of the data over the first transmission resource and the second transmission resources respectively.

Alternatively, the processor 900 is further configured to control the transceiver 910 to transmit the second indication information indicating the position of the second transmission resource.

Alternatively, the processor 900 is configured to control the transceiver 910 to transmit the second indication information over the first transmission resource.

Alternatively, the processor 900 is configured to control the transceiver 910 to transmit the second indication information over a part of the first transmission resources.

Alternatively, the processor 900 is configured to control the transceiver 910 to modulate the second indication information onto the demodulation pilot signal of the first transmission resource and then transmit the modulated second indication information to the receiving device.

Alternatively, the processor 900 is configured to control the transceiver 910 to take a parameter value of the demodulation pilot sequence of the first transmission resource as the second indication information.

Alternatively, the second indication information is information indicating the position of the second transmission resource, or index information of the second transmission resource in the second transmission resource pool corresponding to the first transmission resource.

Alternatively, the processor 900 is further configured to control the transceiver 910 to transmit the third indication information indicating whether or not to transmit the data over the second transmission resource.

In Fig.9, a bus architecture may include a number of buses and bridges connected to each other, so as to connect various circuits for one or more processors 900 and one or more memories 920. In addition, as is known in the art, the bus architecture may be used to connect any other circuits, such as a circuit for a peripheral device, a circuit for a voltage stabilizer and a power management circuit. Bus interfaces are provided, and the transceiver 910 may consist of a transmitter and a receiver for communication with any other devices over a transmission medium. With respect to different UEs, a user interface 930 may also be provided for devices which are to be arranged inside or outside the UE, and these devices may include but not limited to a keypad, a display, a speaker, a microphone and a joystick.

The processor 900 takes charge of managing the bus architecture and general processing. The memory 920 may store data desired for the operation of the processor 900.

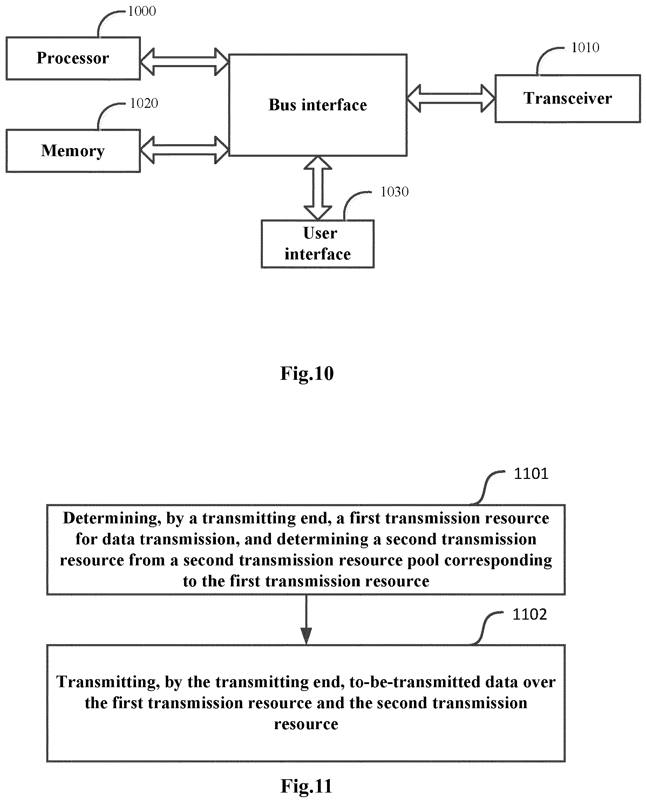

As shown in Fig. 10, in the seventh embodiment of the present disclosure, the receiving device in the system for receiving data includes a processor 1000 and a transceiver 1010. The processor 1000 is configured to determine the first transmission resource for the data transmission, determine the second transmission resource corresponding to the first transmission resource, and control the transceiver 1010 to receive the data over the first transmission resource and the second transmission resource. The transceiver 1010 is configured to receive and transmit the data under the control of the processor 1000.

Alternatively, the processor 1000 is configured to determine the second transmission resource from the second transmission resource pool corresponding to the first transmission resource.

Alternatively, the processor 1000 is configured to take each transmission resource in the second transmission resource pool corresponding to the first transmission resource as one second transmission resource, and combine data information received over the first transmission resource and data information received over one or more second transmission resources, and decode the combined data information.

Alternatively, the processor 1000 is configured to receive the second indication information from the transmitting device via the transceiver 1010, determine the second transmission resource in accordance with the second indication information, combine the to-be-transmitted data received over the first transmission resource and the to-be-transmitted data received over the second transmission resource, and when the combined data is decoded accurately, determine that the data has been successfully received.

Alternatively, the processor 1000 is configured to control the transceiver 1010 to receive the second indication information from the transmitting device over the first transmission resource.

Alternatively, the processor 1000 is configured to determine the second indication information from the transmitting device by demodulating information modulated onto the demodulation pilot signal of the first transmission resource.

Alternatively, the processor 1000 is configured to determine the second indication information in accordance with a parameter value of the demodulation pilot sequence of the first transmission resource.

Alternatively, the second indication information is information about a position of the second transmission resource, or index information of the second transmission resource in the second transmission resource pool corresponding to the first transmission resource.

Alternatively, the processor 1000 is configured to take a predetermined resource pool as the second transmission resource pool, or determine the second transmission resource pool in accordance with the mapping relationship between the first transmission resource and the second transmission resource pool, or take the first transmission resource pool as the second transmission resource pool.

Alternatively, the processor 1000 is further configured to control the transceiver 1010 to receive the data over the second transmission resource after it is determined that the data is to be received over the second transmission resource in accordance with the third indication information.

Alternatively, the processor 1000 is configured to determine the third indication information by demodulating information modulated onto the demodulation pilot signal of the first transmission resource.

In Fig. 10, a bus architecture may include a number of buses and bridges connected to each other, so as to connect various circuits for one or more processors 1000 and one or more memories 1020. In addition, as is known in the art, the bus architecture may be used to connect any other circuits, such as a circuit for a peripheral device, a circuit for a voltage stabilizer and a power management circuit. Bus interfaces are provided, and the transceiver 1010 may consist of a transmitter and a receiver for communication with any other devices over a transmission medium. With respect to different UEs, a user interface 1030 may also be provided for devices which are to be arranged inside or outside the UE, and these devices may include but not limited to a keypad, a display, a speaker, a microphone and a joystick.

The processor 1000 takes charge of managing the bus architecture and general processing. The memory 1020 may store data desired for the operation of the processor 1000.

During the implementation, the transmitting device in Fig.9 may also serve as the receiving device, and the receiving device in Fig. 10 may also serve as the transmitting device. In other words, the functions of the transmitting device and the receiving device may be incorporated into an entity (i.e., the modules of the transmitting device and the receiving device may be integrated into the entity), and the function of the transmitting device or the receiving device may be selected in accordance with the practical need. To be specific, the processor 900, the transceiver 910, the processor 1000 and the transceiver 1010 may be integrated into an entity. Alternatively, the processor 900 and the processor 1000 may be combined into one processor, the transceiver 910 and the transceiver 1010 may be combined into one transceiver, and then the processor and the transceiver may be integrated into an entity.

Based on an identical inventive concept, the present disclosure further provides in some embodiments a method for transmitting data and a method for receiving data. The methods are implemented by the above devices in the system for receiving data, and the principles of the methods are similar to those for the system. The implementation of the methods may refer to that for the system and thus will not be repeated herein.

As shown in Fig. 11, in the eighth embodiment of the present disclosure, the method for transmitting data includes Step 1101 of determining, by the transmitting device, the first transmission resource for the data transmission, and determining the second transmission resource from the second transmission resource pool corresponding to the first transmission resource, and Step 1102 of transmitting, by the transmitting device, to-be-transmitted data over the first transmission resource and the second transmission resource.

Alternatively, the step of determining, by the transmitting device, the first transmission resource for the data transmission includes determining, by the transmitting device, the first transmission resource in accordance with the first indication information received by the transmitting device.

Alternatively, the step of determining, by the transmitting device, the first transmission resource for the data transmission includes determining, by the transmitting device, the first transmission resource from the first transmission resource pool.

Alternatively, the step of determining, by the transmitting device, the first transmission resource from the first transmission resource pool includes randomly selecting, by the transmitting device, the first transmission resource from the first transmission resource pool, or selecting, by the transmitting device, the first transmission resource in accordance with measured signal strength over all the transmission resources in the first transmission resource pool, or selecting, by the transmitting device, the first transmission resource from the first transmission resource pool in accordance with the first predetermined selection rule.

Alternatively, the step of determining, by the transmitting device, the second transmission resource corresponding to the first transmission resource includes selecting, by the transmitting device, the second transmission resource corresponding to the first transmission resource from the second transmission resource pool corresponding to the first transmission resource.

Alternatively, the step of determining, by the transmitting device, the second transmission resource corresponding to the first transmission resource from the second transmission resource pool corresponding to the first transmission resource includes randomly selecting, by the transmitting device, the second transmission resource from the second transmission resource pool, or selecting, by the transmitting device, the second transmission resource in accordance with measured signal strength over all the transmission resources in the second transmission resource pool, or selecting, by the transmitting device, the second transmission resource from the second transmission resource pool in accordance with the second predetermined selection rule.

Alternatively, the second transmission resource pool is determined by the transmitting device by: taking, by the transmitting device, a predetermined resource pool as the second transmission resource pool, or determining, by the transmitting device, the second transmission resource pool in accordance with a mapping relationship between the first transmission resource and the second transmission resource pool, or selecting, by the transmitting device, transmission resources as the second transmission resource pool in accordance with the measured signal strength over all the transmission resources in the first transmission resource pool, or selecting, by the transmitting device, transmission resources as the second transmission resource pool from the first transmission resource pool randomly or in accordance with the second predetermined selection rule, or taking, by the transmitting device, the first transmission resource pool as the second transmission resource pool.

Alternatively, the step of transmitting, by the transmitting device, the to-be-transmitted data over the first transmission resource and the second transmission resource includes repeatedly transmitting, by the transmitting device, a signal generated in accordance with the to-be-transmitted data over the first transmission resource and the second transmission resource, or transmitting, by the transmitting device, a signal generated in accordance with different redundancy version data of the to-be-transmitted data over the first transmission resource and the second transmission resource, or dividing, by the transmitting device, the to-be-transmitted data or data obtained after modulating and encoding the to-be-transmitted data into two parts, and transmitting signals generated in accordance with one of the two parts of the data over the first transmission resource and the second transmission resources respectively.

Alternatively, the method further includes transmitting, by the transmitting device, the second indication information indicating a position of the second transmission resource.

Alternatively, the step of transmitting, by the transmitting device, the second indication information includes transmitting, by the transmitting device, the second indication information to the receiving device over the first transmission resource.

Alternatively, the step of transmitting, by the transmitting device, the second indication information to the receiving device over the first transmission resource includes transmitting, by the transmitting device, the second indication information to the receiving device over a part of the first transmission resources.

Alternatively, the step of transmitting, by the transmitting device, the second indication information includes modulating, by the transmitting device, the second indication information onto the demodulation pilot signal of the first transmission resource, and transmitting the modulated second indication information to the receiving device.

Alternatively, the step of transmitting, by the transmitting device, the second indication information includes taking, a parameter value of a demodulation pilot sequence of the first transmission resource as the second indication information.

Alternatively, the second indication information is information indicating a position of the second transmission resource, or index information of the second transmission resource in the second transmission resource pool corresponding to the first transmission resource.

Alternatively, the method further includes transmitting, by the transmitting device, the third indication information indicating whether or not to transmit the data over the second transmission resource.

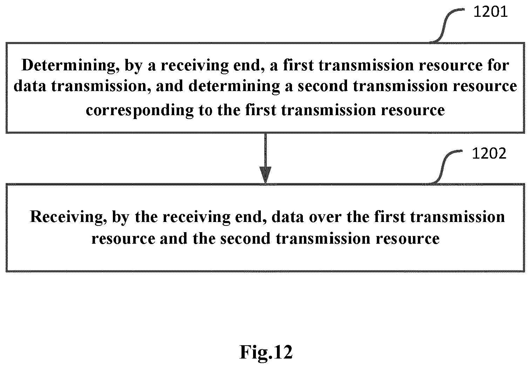

As shown in Fig. 12, in the ninth embodiment of the present disclosure, the method for receiving data includes Step 1201 of determining, by the receiving device, the first transmission resource for the data transmission and determining the second transmission resource from the second transmission resource pool corresponding to the first transmission resource, and Step 1202 of receiving, by the receiving device, the data over the first transmission resource and the second transmission resource.

Alternatively, the step of determining, by the receiving device, the second transmission resource corresponding to the first transmission resource includes taking, by the receiving device, each transmission resource in the second transmission resource pool corresponding to the first transmission resource as one second transmission resource. The step of receiving, by the receiving device, the data over the first transmission resource and the second transmission resource includes combining, by the receiving device, data information received over the first transmission resource and data information received over one or more second transmission resources, and decoding the combined data information.

Alternatively, the step of determining, by the receiving device, the second transmission resource corresponding to the first transmission resource includes receiving, by the receiving device, second indication information from the transmitting device and determining the second transmission resource in accordance with the second indication information. The step of receiving, by the receiving device, the data over the first transmission resource and the second transmission resource includes combining, by the receiving device, data information received over the first transmission resource and data information received over the second transmission resource, and decoding the combined data information.

Alternatively, the step of receiving, by the receiving device, the second indication information includes receiving, by the receiving device, the second indication information from the transmitting device over the first transmission resource.

Alternatively, the step of receiving, by the receiving device, the second indication information includes determining, by the receiving device, the second indication information from the transmitting device by demodulating information demodulated on the demodulation pilot signal of the first transmission resource.

Alternatively, the step of receiving, by the receiving device, the second indication information includes determining, by the receiving device, the second indication information in accordance with a parameter value of the demodulation pilot sequence of the first transmission resource.

Alternatively, the second indication information is information indicating a position of the second transmission resource, or index information of the second transmission resource in the second transmission resource pool corresponding to the first transmission resource.

Alternatively, a predetermined resource pool is taken by the receiving device as the second transmission resource pool, or the second transmission resource pool is determined by the receiving device in accordance with a mapping relationship between the first transmission resource and the second transmission resource pool, or the first transmission resource pool is taken by the receiving device as the second transmission resource pool.

Alternatively, the step of receiving, by the receiving device, the data over the second transmission resource includes receiving the data over the second transmission resource after it is determined that the data is to be received over the second transmission resource in accordance with the received third indication information.

Alternatively, the step of receiving, by the receiving device, the third indication information includes determining the third indication information by demodulating information modulated onto the demodulation pilot signal of the first transmission resource.

It should be appreciated that, the present disclosure may be provided as a method, a system or a computer program product, so the present disclosure may be in the form of full hardware embodiments, full software embodiments, or combinations thereof. In addition, the present disclosure may be in the form of a computer program product implemented on one or more computer-readable storage mediums (including but not limited to disk memory, Compact Disc Read-Only Memory (CD-ROM) and optical memory) including computer-readable program codes.

The present disclosure is described with reference to the flow charts and/or block diagrams showing the method, device (system) and computer program product according to the embodiments of the present disclosure. It should be appreciated that each process and/or block, or combinations thereof, in the flow charts and/or block diagrams may be implemented via computer program commands. These computer program commands may be applied to a general-purpose computer, a special-purpose computer, an embedded processor or any other processor of programmable data processing equipment, so as to form a machine, thereby to obtain the means capable of effecting the functions specified in one or more processes in the flow charts and/or one or more blocks in the block diagrams in accordance with the commands executed by the computer or the processor of the other programmable data processing equipment.

These computer program commands may also be stored in a computer-readable memory capable of guiding the computer or the other programmable data processing equipment to work in a special manner, so as to form a product including a command device capable of effecting the functions specified in one or more processes in the flow charts and/or one or more blocks in the block diagrams.

These computer program commands may also be loaded onto a computer or the other programmable data processing equipment, so as to perform a series of operations thereon and generate the processings implemented by the computer, thereby to provide the steps capable of effecting the functions specified one or more processes in the flow charts and/or one or more blocks in the block diagrams in accordance with the instructions.

The above are merely the preferred embodiments of the present disclosure.

## Claims

1. A method for transmitting data in device-to-device, D2D, communication, comprising steps of:
determining, by a transmitting end (40) of a User Equipment, a first transmission resource for data transmission from a first transmission resource pool, and determining a second transmission resource from a second transmission resource pool associated with the first transmission resource; and
transmitting, by the transmitting end (40), to-be-transmitted data over the first transmission resource and the second transmission resource;
transmitting, by the transmitting end (40), second indication information indicating a position of the second transmission resource;
**characterized in that**, the step of transmitting, by the transmitting end (40), the second indication information comprises:
modulating, by the transmitting end (40), the second indication information onto a demodulation pilot signal of the first transmission resource, and transmitting the modulated second indication information, or
taking, a parameter value of a demodulation pilot sequence of the first transmission resource as the second indication information.

2. The method according to claim 1,
wherein the step of determining, by the transmitting end (40), the first transmission resource from the first transmission resource pool comprises:
randomly selecting, by the transmitting end (40), the first transmission resource from the first transmission resource pool, or
selecting, by the transmitting end (40), the first transmission resource in accordance with measured signal strength over all the transmission resources in the first transmission resource pool, or
selecting, by the transmitting end (40), the first transmission resource from the first transmission resource pool in accordance with a first predetermined selection rule;
wherein the step of determining, by the transmitting end (40), the second transmission resource from the second transmission resource pool corresponding to the first transmission resource comprises:
randomly selecting, by the transmitting end (40), the second transmission resource from the second transmission resource pool, or
selecting, by the transmitting end (40), the second transmission resource in accordance with measured signal strength over all the transmission resources in the second transmission resource pool, or
selecting, by the transmitting end (40), the second transmission resource from the second transmission resource pool in accordance with a second predetermined selection rule.

3. The method according to claim 1 or 2, wherein the step of transmitting, by the transmitting end (40), the to-be-transmitted data over the first transmission resource and the second transmission resource comprises:
repeatedly transmitting, by the transmitting end (40), a signal generated in accordance with the to-be-transmitted data over the first transmission resource and the second transmission resource, or
transmitting, by the transmitting end (40), a signal generated in accordance with different redundancy version data of the to-be-transmitted data over the first transmission resource and the second transmission resource, or
dividing, by the transmitting end (40), the to-be-transmitted data or data obtained after modulating and encoding the to-be-transmitted data into two parts, and transmitting signals generated in accordance with one of the two parts of the data over the first transmission resource and the second transmission resources respectively.

4. The method according to claim 1,
wherein the second transmission resource pool is determined by the transmitting end (40) by:
determining, by the transmitting end (40), the second transmission resource pool in accordance with a mapping relationship between the first transmission resource and the second transmission resource pool, or
selecting, by the transmitting end (40), transmission resources as the second transmission resource pool in accordance with the measured signal strength over all the transmission resources in a first transmission resource pool, or
selecting, by the transmitting end (40), transmission resources as the second transmission resource pool from a first transmission resource pool randomly or in accordance with a second predetermined selection rule, or
taking, by the transmitting end (40), a first transmission resource pool as the second transmission resource pool.

5. A method for receiving data in device-to-device, D2D, communication, comprising:
determining, by a receiving end (41) of a User Equipment, a first transmission resource for data transmission from a first transmission resource pool and determining a second transmission resource associated with the first transmission resource; and
receiving, by the receiving end (41), the data over the first transmission resource and the second transmission resource;
wherein the step of determining, by the receiving end (41), the second transmission resource corresponding to the first transmission resource comprises:
determining, by the receiving end (41), the second transmission resource from a second transmission resource pool corresponding to the first transmission resource;
receiving, by the receiving end (41), second indication information indicating a position of the second transmission resource over the first transmission resource;
**characterized in that**, the step of receiving, by the receiving end (41), the second indication information comprises:
determining, by the receiving end (41), the second indication information by demodulating information demodulated on a demodulation pilot signal of the first transmission resource, or
determining, by the receiving end (41), the second indication information in accordance with a parameter value of a demodulation pilot sequence of the first transmission resource.

6. The method according to claim 5, wherein the step of determining, by the receiving end (41), the second transmission resource corresponding to the first transmission resource comprises:
taking, by the receiving end (41), each transmission resource in the second transmission resource pool corresponding to the first transmission resource as one second transmission resource, and
the step of receiving, by the receiving end (41), the data over the first transmission resource and the second transmission resource comprises:
combining, by the receiving end (41), data information received over the first transmission resource and data information received over one or more second transmission resources, and decoding the combined data information.

7. The method according to claim 5, wherein the step of determining, by the receiving end (41), the second transmission resource corresponding to the first transmission resource comprises:
receiving, by the receiving end (41), second indication information from the transmitting end (40) and determining the second transmission resource in accordance with the second indication information, and
the step of receiving, by the receiving end (41), the data over the first transmission resource and the second transmission resource comprises:
combining, by the receiving end (41), data information received over the first transmission resource and data information received over the second transmission resource, and decoding combined data information.

8. The method according to claim 5,
wherein the second transmission resource pool is determined by the receiving end (41) in accordance with a mapping relationship between the first transmission resource and the second transmission resource pool, or
a first transmission resource pool is taken by the receiving end (41) as the second transmission resource pool.

9. A User Equipment for transmitting data in device-to-device, D2D, communication, comprising:
a first determination module (701) configured to determine a first transmission resource for data transmission from a first transmission resource pool, and determine a second transmission resource from a second transmission resource pool associated with the first transmission resource; and
a transmission module (702) configured to transmit to-be-transmitted data over the first transmission resource and the second transmission resource;
**characterized in that**, the first determination module (701) is further configured to transmit second indication information indicating a position of the second transmission resource;
wherein the first determination module (701) is configured to:
modulate the second indication information onto a demodulation pilot signal of the first transmission resource and transmit the modulated second indication information to the receiving end (41), or
take a parameter value of a demodulation pilot sequence of the first transmission resource as the second indication information.

10. The User Equipment according to claim 9, wherein the first determination module (701) is configured to:
randomly select the first transmission resource from the first transmission resource pool, or
select the first transmission resource in accordance with measured signal strength over all the transmission resources in the first transmission resource pool, or
select the first transmission resource from the first transmission resource pool in accordance with a first predetermined selection rule;
wherein the first determination module (701) is configured to:
randomly select the second transmission resource from the second transmission resource pool, or
select the second transmission resource in accordance with measured signal strength over all the transmission resources in the second transmission resource pool, or
select the second transmission resource from the second transmission resource pool in accordance with a second predetermined selection rule.

11. The User Equipment according to claim 9 or 10, wherein the transmission module (702) is configured to:
repeatedly transmit a signal generated in accordance with the to-be-transmitted data over the first transmission resource and the second transmission resource, or
transmit a signal generated in accordance with different redundancy version data of the to-be-transmitted data over the first transmission resource and the second transmission resource, or
divide the to-be-transmitted data or data obtained after modulating and encoding the to-be-transmitted data into two parts, and transmit signals generated in accordance with one of the two parts of the data over the first transmission resource and the second transmission resources respectively.

12. The User Equipment according to claim 9, wherein the first determination module (701) is configured to:
determine the second transmission resource pool in accordance with a mapping relationship between the first transmission resource and the second transmission resource pool, or
select transmission resources as the second transmission resource pool in accordance with the measured signal strength over all the transmission resources in a first transmission resource pool, or
select transmission resources as the second transmission resource pool from the first transmission resource pool randomly or in accordance with a second predetermined selection rule, or
take the first transmission resource pool as the second transmission resource pool.

13. A User Equipment for receiving data in device-to-device, D2D, communication, comprising:
a second determination module (801) configured to determine a first transmission resource for data transmission from a first transmission resource pool and determine a second transmission resource associated with the first transmission resource; and
a reception module (802) configured to receive the data over the first transmission resource and the second transmission resource;
wherein the second determination module (801) is configured to determine the second transmission resource from a second transmission resource pool corresponding to the first transmission resource;
wherein the reception module (802) is configured to receive second indication information indicating a position of the second transmission resource from the transmitting end (40) over the first transmission resource;
**characterized in that**, the reception module (802) is configured to:
determine the second indication information from the transmitting end (40) by demodulating information modulated on a demodulation pilot signal of the first transmission resource, or
determine the second indication information in accordance with a parameter value of a demodulation pilot sequence of the first transmission resource.

14. The User Equipment according to claim 13, wherein
the second determination module (801) is configured to take each transmission resource in the second transmission resource pool corresponding to the first transmission resource as one second transmission resource, and
the reception module (802) is configured to combine data information received over the first transmission resource and data information received over one or more second transmission resources, and decode combined data information.

15. The User Equipment according to claim 13, wherein
the second determination module (801) is configured to receive second indication information from a transmitting end (40), and determine the second transmission resource in accordance with the second indication information, and
the reception module (802) is configured to combine data information received over the first transmission resource and data information received over the second transmission resource and decode combined data information.

16. The User Equipment according to claim 13, wherein the second determination module (801) is configured to:
determine the second transmission resource pool in accordance with a mapping relationship between the first transmission resource and the second transmission resource pool, or
take a first transmission resource pool as the second transmission resource pool.

## Patentansprüche

1. Verfahren zum Übertragen von Daten in einer Vorrichtung-zu-Vorrichtung-, Deviceto-Device-, D2D, Kommunikation, das folgende Schritte umfasst:
Bestimmen einer ersten Übertragungsressource für Datenübertragung durch ein Übertragungsende (40) einer Benutzerausrüstung aus einem ersten Übertragungsressourcen-Pool, und Bestimmen einer zweiten Übertragungsressource aus einem zweiten Übertragungsressourcen-Pool, der mit der ersten Übertragungsressource verknüpft ist; und
Übertragen von zu übertragenden Daten durch das Übertragungsende (40) über die erste Übertragungsressource und die zweite Übertragungsressource;
Übertragen von zweiten Angabeinformationen, die eine Position der zweiten Übertragungsressource angeben, durch das Übertragungsende (40);
**dadurch gekennzeichnet, dass** der Schritt des Übertragens der zweiten Angabeinformationen durch das Übertragungsende (40) umfasst:
Modulieren der zweiten Angabeinformationen durch das Übertragungsende (40) auf ein Demodulationspilotsignal der ersten Übertragungsressource, und Übertragen der modulierten zweiten Angabeinformationen, oder
Übernehmen eines Parameterwerts einer Demodulationspilotsequenz der ersten Übertragungsressource als die zweiten Angabeinformationen.

2. Verfahren nach Anspruch 1,
wobei der Schritt des Bestimmens der ersten Übertragungsressource durch das Übertragungsende (40) aus dem ersten Übertragungsressourcen-Pool umfasst:
zufälliges Auswählen der ersten Übertragungsressource durch das Übertragungsende (40) aus dem ersten Übertragungsressourcen-Pool, oder
Auswählen der ersten Übertragungsressource durch das Übertragungsende (40) in Übereinstimmung mit der gemessenen Signalstärke über alle die Übertragungsressourcen im ersten Übertragungsressourcen-Pool, oder
Auswählen der ersten Übertragungsressource durch das Übertragungsende (40) aus dem ersten Übertragungsressourcen-Pool in Übereinstimmung mit einer ersten vorbestimmten Auswahlregel;
wobei der Schritt des Bestimmens der zweiten Übertragungsressource aus dem zweiten Übertragungsressourcen-Pool, der der ersten Übertragungsressource entspricht, durch das Übertragungsende (40) umfasst:
zufälliges Auswählen der zweiten Übertragungsressource durch das Übertragungsende (40) aus dem zweiten Übertragungsressourcen-Pool, oder
Auswählen der zweiten Übertragungsressource durch das Übertragungsende (40) in Übereinstimmung mit der gemessenen Signalstärke über alle die Übertragungsressourcen im zweiten Übertragungsressourcen-Pool, oder
Auswählen der zweiten Übertragungsressource durch das Übertragungsende (40) aus dem zweiten Übertragungsressourcen-Pool in Übereinstimmung mit einer zweiten vorbestimmten Auswahlregel.

3. Verfahren nach Anspruch 1 oder 2, wobei der Schritt des Übertragens der zu übertragenden Daten durch das Übertragungsende (40) über die erste Übertragungsressource und die zweite Übertragungsressource umfasst:
wiederholtes Übertragen eines in Übereinstimmung mit den zu übertragenden Daten erzeugten Signals durch das Übertragungsende (40) über die erste Übertragungsressource und die zweite Übertragungsressource, oder
Übertragen eines in Übereinstimmung mit anderen Redundanzversionsdaten der zu übertragenden Daten erzeugten Signals durch das Übertragungsende (40) über die erste Übertragungsressource und die zweite Übertragungsressource, oder
Aufteilen der zu übertragenden Daten oder Daten, die nach Modulieren und Codieren der zu übertragenden Daten erhalten werden, durch das Übertragungsende (40) in zwei Teile, und Übertragen von in Übereinstimmung mit einem der zwei Teile der Daten erzeugten Signalen über die erste Übertragungsressource bzw. die zweiten Übertragungsressourcen.

4. Verfahren nach Anspruch 1,
wobei der zweite Übertragungsressourcen-Pool durch das Übertragungsende (40) bestimmt wird durch:
Bestimmen des zweiten Übertragungsressourcen-Pools durch das Übertragungsende (40) in Übereinstimmung mit einer Zuordnungsbeziehung zwischen der ersten Übertragungsressource und dem zweiten Übertragungsressourcen-Pool, oder
Auswählen von Übertragungsressourcen durch das Übertragungsende (40) als den zweiten Übertragungsressourcen-Pool in Übereinstimmung mit der gemessenen Signalstärke über alle die Übertragungsressourcen in einem ersten Übertragungsressourcen-Pool, oder
Auswählen von Übertragungsressourcen als den zweiten Übertragungsressourcen-Pool durch das Übertragungsende (40) aus einem ersten Übertragungsressourcen-Pool zufällig oder in Übereinstimmung mit einer zweiten vorbestimmten Auswahlregel, oder
Übernehmen eines ersten Übertragungsressourcen-Pools durch das Übertragungsende (40) als den zweiten Übertragungsressourcen-Pool.

5. Verfahren zum Empfangen von Daten in einer Vorrichtung-zu-Vorrichtung-, D2D, Kommunikation, umfassend:
Bestimmen einer ersten Übertragungsressource für Datenübertragung durch ein Empfangsende (41) einer Benutzerausrüstung aus einem ersten Übertragungsressourcen-Pool, und Bestimmen einer zweiten Übertragungsressource, die mit der ersten Übertragungsressource verknüpft ist; und
Empfangen der Daten durch das Empfangsende (41) über die erste Übertragungsressource und die zweite Übertragungsressource;
wobei der Schritt des Bestimmens der zweiten Übertragungsressource, die der ersten Übertragungsressource entspricht, durch das Empfangsende (41) umfasst:
Bestimmen der zweiten Übertragungsressource durch das Empfangsende (41) aus einem zweiten Übertragungsressourcen-Pool, der der ersten Übertragungsressource entspricht;
Empfangen von zweiten Angabeinformationen, die eine Position der zweiten Übertragungsressource angeben, durch das Empfangsende (41) über die erste Übertragungsressource;
**dadurch gekennzeichnet, dass** der Schritt des Empfangens der zweiten Angabeinformationen durch das Empfangsende (41) umfasst:
Bestimmen der zweiten Angabeinformationen durch das Empfangsende (41) durch Demodulieren von Informationen, die auf einem Demodulationspilotsignal der ersten Übertragungsressource demoduliert wurden, oder
Bestimmen der zweiten Angabeinformationen durch das Empfangsende (41) in Übereinstimmung mit einem Parameterwert einer Demodulationspilotsequenz der ersten Übertragungsressource.

6. Verfahren nach Anspruch 5,
wobei der Schritt des Bestimmens der zweiten Übertragungsressource, die der ersten Übertragungsressource entspricht, durch das Empfangsende (41) umfasst:
Übernehmen jeder Übertragungsressource im zweiten Übertragungsressourcen-Pool, der der ersten Übertragungsressource entspricht, durch das Empfangsende (41) als eine zweite Übertragungsressource, und
der Schritt des Empfangens der Daten durch das Empfangsende (41) über die erste Übertragungsressource und die zweite Übertragungsressource umfasst:
Kombinieren von Dateninformationen, die über die erste Übertragungsressource empfangen werden, und Dateninformationen, die über eine oder mehrere zweite Übertragungsressourcen empfangen werden, durch das Empfangsende (41), und Decodieren der kombinierten Dateninformationen.

7. Verfahren nach Anspruch 5,
wobei der Schritt des Bestimmens der zweiten Übertragungsressource, die der ersten Übertragungsressource entspricht, durch das Empfangsende (41) umfasst:
Empfangen von zweiten Angabeinformationen durch das Empfangsende (41) vom Übertragungsende (40), und Bestimmen der zweiten Übertragungsressource in Übereinstimmung mit den zweiten Angabeinformationen, und
der Schritt des Empfangens der Daten durch das Empfangsende (41) über die erste Übertragungsressource und die zweite Übertragungsressource umfasst:
Kombinieren von Dateninformationen, die über die erste Übertragungsressource empfangen werden, und Dateninformationen, die über die zweite Übertragungsressource empfangen werden, durch das Empfangsende (41), und Decodieren von kombinierten Dateninformationen.

8. Verfahren nach Anspruch 5,
wobei der zweite Übertragungsressourcen-Pool durch das Empfangsende (41) in Übereinstimmung mit einer Zuordnungsbeziehung zwischen der ersten Übertragungsressource und dem zweiten Übertragungsressourcen-Pool bestimmt wird, oder
ein erster Übertragungsressourcen-Pool durch das Empfangsende (41) als der zweite Übertragungsressourcen-Pool übernommen wird.

9. Benutzerausrüstung zum Übertragen von Daten in einer Vorrichtung-zu-Vorrichtung-, D2D, Kommunikation, umfassend:
ein erstes Bestimmungsmodul (701), das so konfiguriert ist, dass es eine erste Übertragungsressource für Datenübertragung aus einem ersten Übertragungsressourcen-Pool bestimmt, und eine zweite Übertragungsressource aus einem zweiten Übertragungsressourcen-Pool, der mit der ersten Übertragungsressource verknüpft ist, bestimmt; und
ein Übertragungsmodul (702), das so konfiguriert ist, dass es zu übertragende Daten über die erste Übertragungsressource und die zweite Übertragungsressource überträgt;
**dadurch gekennzeichnet, dass** das erste Bestimmungsmodul (701) weiter so konfiguriert ist, dass es zweite Angabeinformationen, die eine Position der zweiten Übertragungsressource angeben, überträgt;
wobei das erste Bestimmungsmodul (701) so konfiguriert ist, dass es:
die zweiten Angabeinformationen auf ein Demodulationspilotsignal der ersten Übertragungsressource moduliert und die modulierten zweiten Angabeinformationen an das Empfangsende (41) überträgt, oder
einen Parameterwert einer Demodulationspilotsequenz der ersten Übertragungsressource als die zweiten Angabeinformationen übernimmt.

10. Benutzerausrüstung nach Anspruch 9,
wobei das erste Bestimmungsmodul (701) so konfiguriert ist, dass es:
die erste Übertragungsressource zufällig aus dem ersten Übertragungsressourcen-Pool auswählt, oder
die erste Übertragungsressource in Übereinstimmung mit der gemessenen Signalstärke über alle die Übertragungsressourcen im ersten Übertragungsressourcen-Pool auswählt, oder
die erste Übertragungsressource in Übereinstimmung mit einer ersten vorbestimmten Auswahlregel aus dem ersten Übertragungsressourcen-Pool auswählt;
wobei das erste Bestimmungsmodul (701) so konfiguriert ist, dass es:
die zweite Übertragungsressource zufällig aus dem zweiten Übertragungsressourcen-Pool auswählt, oder
die zweite Übertragungsressource in Übereinstimmung mit der gemessenen Signalstärke über alle die Übertragungsressourcen im zweiten Übertragungsressourcen-Pool auswählt, oder
die zweite Übertragungsressource in Übereinstimmung mit einer zweiten vorbestimmten Auswahlregel aus dem zweiten Übertragungsressourcen-Pool auswählt.

11. Benutzerausrüstung nach Anspruch 9 oder 10,
wobei das Übertragungsmodul (702) so konfiguriert ist, dass es:
ein in Übereinstimmung mit den zu übertragenden Daten erzeugtes Signal wiederholt über die erste Übertragungsressource und die zweite Übertragungsressource überträgt, oder
ein in Übereinstimmung mit anderen Redundanzversionsdaten der zu übertragenden Daten erzeugtes Signal über die erste Übertragungsressource und die zweite Übertragungsressource überträgt, oder
die zu übertragenden Daten oder Daten, die nach Modulieren und Codieren der zu übertragenden Daten erhalten werden, in zwei Teile aufteilt, und in Übereinstimmung mit einem der zwei Teile der Daten erzeugte Signale über die erste Übertragungsressource bzw. die zweiten Übertragungsressourcen überträgt.

12. Benutzerausrüstung nach Anspruch 9,
wobei das erste Bestimmungsmodul (701) so konfiguriert ist, dass es:
den zweiten Übertragungsressourcen-Pool in Übereinstimmung mit einer Zuordnungsbeziehung zwischen der ersten Übertragungsressource und dem zweiten Übertragungsressourcen-Pool bestimmt, oder
Übertragungsressourcen in Übereinstimmung mit der gemessenen Signalstärke über alle die Übertragungsressourcen in einem ersten Übertragungsressourcen-Pool als den zweiten Übertragungsressourcen-Pool auswählt, oder
Übertragungsressourcen aus dem ersten Übertragungsressourcen-Pool zufällig oder in Übereinstimmung mit einer zweiten vorbestimmten Auswahlregel als den zweiten Übertragungsressourcen-Pool auswählt, oder
den ersten Übertragungsressourcen-Pool als den zweiten Übertragungsressourcen-Pool übernimmt.

13. Benutzerausrüstung zum Empfangen von Daten in einer Vorrichtung-zu-Vorrichtung-, D2D, Kommunikation, umfassend:
ein zweites Bestimmungsmodul (801), das so konfiguriert ist, dass es eine erste Übertragungsressource für Datenübertragung aus einem ersten Übertragungsressourcen-Pool bestimmt, und eine zweite Übertragungsressource bestimmt, die mit der ersten Übertragungsressource verknüpft ist; und
ein Empfangsmodul (802), das so konfiguriert ist, dass es die Daten über die erste Übertragungsressource und die zweite Übertragungsressource empfängt;
wobei das zweite Bestimmungsmodul (801) so konfiguriert ist, dass es die zweite Übertragungsressource aus einem zweiten Übertragungsressourcen-Pool, der der ersten Übertragungsressource entspricht, bestimmt;
wobei das Empfangsmodul (802) so konfiguriert ist, dass es zweite Angabeinformationen, die eine Position der zweiten Übertragungsressource angeben, vom Übertragungsende (40) über die erste Übertragungsressource empfängt;
**dadurch gekennzeichnet, dass** das Empfangsmodul (802) so konfiguriert ist, dass es:
die zweiten Angabeinformationen vom Übertragungsende (40) durch Demodulieren von auf ein Demodulationspilotsignal der ersten Übertragungsressource modulierten Informationen bestimmt, oder
die zweiten Angabeinformationen in Übereinstimmung mit einem Parameterwert einer Demodulationspilotsequenz der ersten Übertragungsressource bestimmt.

14. Benutzerausrüstung nach Anspruch 13,
wobei das zweite Bestimmungsmodul (801) so konfiguriert ist, dass es jede Übertragungsressource im zweiten Übertragungsressourcen-Pool, der der ersten Übertragungsressource entspricht, als eine zweite Übertragungsressource übernimmt, und
das Empfangsmodul (802) so konfiguriert ist, dass es Dateninformationen, die über die erste Übertragungsressource empfangen werden, und Dateninformationen, die über eine oder mehrere zweite Übertragungsressourcen empfangen werden, kombiniert, und kombinierte Dateninformationen decodiert.

15. Benutzerausrüstung nach Anspruch 13,
wobei das zweite Bestimmungsmodul (801) so konfiguriert ist, dass es zweite Angabeinformationen von einem Übertragungsende (40) empfängt und die zweite Übertragungsressource in Übereinstimmung mit den zweiten Angabeinformationen bestimmt, und
das Empfangsmodul (802) so konfiguriert ist, dass es Dateninformationen, die über die erste Übertragungsressource empfangen werden, und Dateninformationen, die über die zweite Übertragungsressource empfangen werden, kombiniert, und kombinierte Dateninformationen decodiert.

16. Benutzerausrüstung nach Anspruch 13,
wobei das zweite Bestimmungsmodul (801) so konfiguriert ist, dass es:
den zweiten Übertragungsressourcen-Pool in Übereinstimmung mit einer Zuordnungsbeziehung zwischen der ersten Übertragungsressource und dem zweiten Übertragungsressourcen-Pool bestimmt, oder
einen ersten Übertragungsressourcen-Pool als den zweiten Übertragungsressourcen-Pool übernimmt.

## Revendications

1. Procédé d'émission de données dans une communication de dispositif à dispositif, D2D, comprenant les étapes de :
détermination, par une extrémité émettrice (40) d'un équipement utilisateur, d'une première ressource de transmission pour une émission de données parmi un groupe de premières ressources de transmission, et détermination d'une seconde ressource de transmission parmi un groupe de secondes ressources de transmission associée à la première ressource de transmission ; et
émission, par l'extrémité émettrice (40), de données à émettre sur la première ressource de transmission et la seconde ressource de transmission ;
émission, par l'extrémité émettrice (40), de secondes informations d'indication indiquant une position de la seconde ressource de transmission ;
**caractérisé en ce que** l'étape d'émission, par l'extrémité émettrice (40), des secondes informations d'indication comprend :
la modulation, par l'extrémité émettrice (40), des secondes informations d'indication sur un signal pilote de démodulation de la première ressource de transmission, et l'émission des secondes informations d'indication modulées, ou
l'utilisation d'une valeur de paramètre d'une séquence pilote de démodulation de la première ressource de transmission au titre des secondes informations d'indication.

2. Procédé selon la revendication 1,
dans lequel l'étape de détermination, par l'extrémité émettrice (40), de la première ressource de transmission parmi le groupe de premières ressources de transmission comprend :
la sélection aléatoire, par l'extrémité émettrice (40), de la première ressource de transmission parmi le groupe de premières ressources de transmission, ou
la sélection, par l'extrémité émettrice (40), de la première ressource de transmission en fonction d'une intensité de signal mesurée sur l'ensemble des ressources de transmission dans le groupe de premières ressources de transmission, ou
la sélection, par l'extrémité émettrice (40), de la première ressource de transmission parmi le groupe de premières ressources de transmission conformément à une première règle de sélection prédéterminée ;
dans lequel l'étape de détermination, par l'extrémité émettrice (40), de la seconde ressource de transmission parmi le groupe de secondes ressources de transmission correspondant à la première ressource de transmission comprend :
la sélection aléatoire, par l'extrémité émettrice (40), de la seconde ressource de transmission parmi le groupe de secondes ressources de transmission, ou
la sélection, par l'extrémité émettrice (40), de la seconde ressource de transmission en fonction d'une intensité de signal mesurée sur l'ensemble des ressources de transmission dans le groupe de secondes ressources de transmission, ou
la sélection, par l'extrémité émettrice (40), de la seconde ressource de transmission parmi le groupe de secondes ressources de transmission conformément à une seconde règle de sélection prédéterminée.

3. Procédé selon la revendication 1 ou 2, dans lequel l'étape d'émission, par l'extrémité émettrice (40), des données à émettre sur la première ressource de transmission et la seconde ressource de transmission comprend :
l'émission répétée, par l'extrémité émettrice (40), d'un signal généré en fonction des données à émettre sur la première ressource de transmission et la seconde ressource de transmission, ou
l'émission, par l'extrémité émettrice (40), d'un signal généré en fonction de données d'une version de redondance différente des données à émettre sur la première ressource de transmission et la seconde ressource de transmission, ou
la division, par l'extrémité émettrice (40), des données à émettre ou des données obtenues après modulation et codage des données à émettre en deux parties, et l'émission de signaux générés en fonction de l'une des deux parties des données sur la première ressource de transmission et les secondes ressources de transmission respectivement.

4. Procédé selon la revendication 1,
dans lequel le groupe de secondes ressources de transmission est déterminé par l'extrémité émettrice (40) par :
détermination, par l'extrémité émettrice (40), du groupe de secondes ressources de transmission en fonction d'une relation de correspondance entre la première ressource de transmission et le groupe de secondes ressources de transmission, ou
la sélection, par l'extrémité émettrice (40), de ressources de transmission au titre du groupe de secondes ressources de transmission en fonction de l'intensité de signal mesurée sur l'ensemble des ressources de transmission dans un groupe de premières ressources de transmission, ou
la sélection, par l'extrémité émettrice (40), de ressources de transmission au titre du groupe de secondes ressources de transmission parmi un groupe de premières ressources de transmission de façon aléatoire ou conformément à une seconde règle de sélection prédéterminée, ou
l'utilisation, par l'extrémité émettrice (40), d'un groupe de premières ressources de transmission au titre du groupe de secondes ressources de transmission.

5. Procédé de réception de données dans une communication de dispositif à dispositif, D2D, comprenant les étapes de :
détermination, par une extrémité réceptrice (41) d'un équipement utilisateur, d'une première ressource de transmission pour une émission de données parmi un groupe de premières ressources de transmission, et détermination d'une seconde ressource de transmission associée à la première ressource de transmission ; et
réception, par l'extrémité réceptrice (41), des données sur la première ressource de transmission et la seconde ressource de transmission ;
dans lequel l'étape de détermination, par l'extrémité réceptrice (41), de la seconde ressource de transmission correspondant à la première ressource de transmission comprend :
la détermination, par l'extrémité réceptrice (41), de la seconde ressource de transmission parmi un groupe de secondes ressources de transmission correspondant à la première ressource de transmission ;
la réception, par l'extrémité réceptrice (41), de secondes informations d'indication indiquant une position de la seconde ressource de transmission sur la première ressource de transmission ;
**caractérisé en ce que** l'étape de réception, par l'extrémité réceptrice (41), des secondes informations d'indication comprend :
la détermination, par l'extrémité réceptrice (41), des secondes informations d'indication en démodulant des informations démodulées sur un signal pilote de démodulation de la première ressource de transmission, ou
la détermination, par l'extrémité réceptrice (41), des secondes informations d'indication en fonction d'une valeur de paramètre d'une séquence pilote de démodulation de la première ressource de transmission.

6. Procédé selon la revendication 5,
dans lequel l'étape de détermination, par l'extrémité réceptrice (41), de la seconde ressource de transmission correspondant à la première ressource de transmission comprend :
l'utilisation, par l'extrémité réceptrice (41), de chaque ressource de transmission dans le groupe de secondes ressources de transmission correspondant à la première ressource de transmission au titre d'une seconde ressource de transmission, et
l'étape de réception, par l'extrémité réceptrice (41), des données sur la première ressource de transmission et la seconde ressource de transmission comprend :
la combinaison, par l'extrémité réceptrice (41), d'informations de données reçues sur la première ressource de transmission et d'informations de données reçues sur une ou plusieurs secondes ressources de transmission, et le décodage des informations de données combinées.

7. Procédé selon la revendication 5,
dans lequel l'étape de détermination, par l'extrémité réceptrice (41), de la seconde ressource de transmission correspondant à la première ressource de transmission comprend :
la réception, par l'extrémité réceptrice (41), de secondes informations d'indication en provenance de l'extrémité émettrice (40) et la détermination de la seconde ressource de transmission en fonction des secondes informations d'indication, et
l'étape de réception, par l'extrémité réceptrice (41), des données sur la première ressource de transmission et la seconde ressource de transmission comprend :
la combinaison, par l'extrémité réceptrice (41), d'informations de données reçues sur la première ressource de transmission et d'informations de données reçues sur la seconde ressource de transmission, et le décodage des informations de données combinées.

8. Procédé selon la revendication 5,
dans lequel le groupe de secondes ressources de transmission est déterminé par l'extrémité réceptrice (41) en fonction d'une relation de correspondance entre la première ressource de transmission et le groupe de secondes ressources de transmission, ou
un groupe de premières ressources de transmission est utilisé par l'extrémité réceptrice (41) au titre du groupe de secondes ressources de transmission.

9. Équipement utilisateur pour émettre des données dans une communication de dispositif à dispositif, D2D, comprenant :
un premier module de détermination (701) configuré pour déterminer une première ressource de transmission pour une émission de données parmi un groupe de premières ressources de transmission, et déterminer une seconde ressource de transmission parmi un groupe de secondes ressources de transmission associée à la première ressource de transmission ; et
un module d'émission (702) configuré pour émettre des données à émettre sur la première ressource de transmission et la seconde ressource de transmission ;
**caractérisé en ce que** le premier module de détermination (701) est en outre configuré pour émettre des secondes informations d'indication indiquant une position de la seconde ressource de transmission ;
dans lequel le premier module de détermination (701) est configuré pour :
moduler les secondes informations d'indication sur un signal pilote de démodulation de la première ressource de transmission et émettre les secondes informations d'indication modulées vers l'extrémité réceptrice (41), ou
utiliser une valeur de paramètre d'une séquence pilote de démodulation de la première ressource de transmission au titre des secondes informations d'indication.

10. Équipement utilisateur selon la revendication 9,
dans lequel le premier module de détermination (701) est configuré pour :
sélectionner aléatoirement la première ressource de transmission parmi le groupe de premières ressources de transmission, ou
sélectionner la première ressource de transmission en fonction d'une intensité de signal mesurée sur l'ensemble des ressources de transmission dans le groupe de premières ressources de transmission, ou
sélectionner la première ressource de transmission parmi le groupe de premières ressources de transmission conformément à une première règle de sélection prédéterminée ;
dans lequel le premier module de détermination (701) est configuré pour :
sélectionner aléatoirement la seconde ressource de transmission parmi le groupe de secondes ressources de transmission, ou
sélectionner la seconde ressource de transmission en fonction d'une intensité de signal mesurée sur l'ensemble des ressources de transmission dans le groupe de secondes ressources de transmission, ou
sélectionner la seconde ressource de transmission parmi le groupe de secondes ressources de transmission conformément à une seconde règle de sélection prédéterminée.

11. Équipement utilisateur selon la revendication 9 ou 10,
dans lequel le module d'émission (702) est configuré pour :
émettre de façon répétée un signal généré en fonction des données à émettre sur la première ressource de transmission et la seconde ressource de transmission, ou
émettre un signal généré en fonction de données d'une version de redondance différente des données à émettre sur la première ressource de transmission et la seconde ressource de transmission, ou
diviser les données à émettre ou des données obtenues après modulation et codage des données à émettre en deux parties, et émettre des signaux générés en fonction de l'une des deux parties des données sur la première ressource de transmission et les secondes ressources de transmission respectivement.

12. Équipement utilisateur selon la revendication 9,
dans lequel le premier module de détermination (701) est configuré pour :
déterminer le groupe de secondes ressources de transmission en fonction d'une relation de correspondance entre la première ressource de transmission et le groupe de secondes ressources de transmission, ou
sélectionner des ressources de transmission au titre du groupe de secondes ressources de transmission en fonction de l'intensité de signal mesurée sur l'ensemble des ressources de transmission dans un groupe de premières ressources de transmission, ou
sélectionner des ressources de transmission au titre du groupe de secondes ressources de transmission parmi le groupe de premières ressources de transmission de façon aléatoire ou conformément à une seconde règle de sélection prédéterminée, ou
utiliser le groupe de premières ressources de transmission au titre du groupe de secondes ressources de transmission.

13. Équipement utilisateur pour recevoir des données dans une communication de dispositif à dispositif, D2D, comprenant :
un second module de détermination (801) configuré pour déterminer une première ressource de transmission pour une émission de données parmi un groupe de premières ressources de transmission, et déterminer une seconde ressource de transmission associée à la première ressource de transmission ; et
un module de réception (802) configuré pour recevoir les données sur la première ressource de transmission et la seconde ressource de transmission ;
dans lequel le second module de détermination (801) est configuré pour déterminer la seconde ressource de transmission parmi un groupe de secondes ressources de transmission correspondant à la première ressource de transmission ;
dans lequel le module de réception (802) est configuré pour recevoir des secondes informations d'indication indiquant une position de la seconde ressource de transmission en provenance de l'extrémité émettrice (40) sur la première ressource de transmission ;
**caractérisé en ce que** le module de réception (802) est configuré pour :
déterminer les secondes informations d'indication en provenance de l'extrémité émettrice (40) en démodulant des informations modulées sur un signal pilote de démodulation de la première ressource de transmission, ou
déterminer les secondes informations d'indication en fonction d'une valeur de paramètre d'une séquence pilote de démodulation de la première ressource de transmission.

14. Équipement utilisateur selon la revendication 13,
dans lequel le second module de détermination (801) est configuré pour utiliser chaque ressource de transmission dans le groupe de secondes ressources de transmission correspondant à la première ressource de transmission au titre d'une seconde ressource de transmission, et
le module de réception (802) est configuré pour combiner des informations de données reçues sur la première ressource de transmission et des informations de données reçues sur une ou plusieurs secondes ressources de transmission, et décoder les informations de données combinées.

15. Équipement utilisateur selon la revendication 13,
dans lequel le second module de détermination (801) est configuré pour recevoir des secondes informations d'indication en provenance d'une extrémité émettrice (40), et déterminer la seconde ressource de transmission en fonction des secondes informations d'indication, et
le module de réception (802) est configuré pour combiner des informations de données reçues sur la première ressource de transmission et des informations de données reçues sur la seconde ressource de transmission, et décoder les informations de données combinées.

16. Équipement utilisateur selon la revendication 13,
dans lequel le second module dé détermination (801) est configuré pour :
déterminer le groupe de secondes ressources de transmission en fonction d'une relation de correspondance entre la première ressource de transmission et le groupe de secondes ressources de transmission, ou
utiliser un groupe de premières ressources de transmission au titre du groupe de secondes ressources de transmission.
